# EUROPÄISCHE PATENTSCHRIFT

(11) **EP 1 567 829 B1**
(45) Veröffentlichungstag und Bekanntmachung des Hinweises auf die Patenterteilung: **28.06.2006**
(21) Anmeldenummer: 03788813.8
(22) Anmeldetag: 22.11.2003
(51) Int. Cl.: G01C 21/26

(54) **NAVIGATIONSSYSTEM UND VERFAHREN ZUM BETREIBEN EINES NAVIGATIONSSYSTEMS**
NAVIGATION SYSTEM AND METHOD FOR OPERATING A NAVIGATION SYSTEM
SYSTEME DE NAVIGATION ET PROCEDE DE FONCTIONNEMENT D'UN SYSTEME DE NAVIGATION

(30) Priorität: 27.11.2002 DE 10255329
(43) Veröffentlichungstag der Anmeldung: 31.08.2005
(73) Patentinhaber: ROBERT BOSCH GMBH, 70442 Stuttgart (DE)
(72) Erfinder: HAHLWEG, Cornelius, 22147 Hamburg (DE); KERSKEN, Ulrich, 31199 Diekholzen (DE)
(86) Internationale Anmeldenummer: PCT/DE2003/003878
(87) Internationale Veröffentlichungsnummer: WO 2004/048894

(56) Entgegenhaltungen:
- EP-A- 0 798 539
- EP-A- 1 092 952
- PATENT ABSTRACTS OF JAPAN vol. 015, no. 119 (P-1183), 22. März 1991 (1991-03-22) & JP 03 007983 A (ALPINE ELECTRON INC), 16. Januar 1991 (1991-01-16)

## Beschreibung

Die Erfindung betrifft ein Navigationssystem für ein Kraftfahrzeug gemäß dem Oberbegriff des Anspruchs 1. Des weiteren betrifft die Erfindung ein Verfahren zum Betreiben eines Navigationssystems gemäß dem Oberbegriff des Anspruchs 5.

Aus der DE-A-100 09 149 A1 oder der DE-A-100 38 343 sind Verfahren zur Codierung und Decodierung von Objekten in einem Verkehrswegenetz bekannt. Mit Hilfe dieser aus dem Stand der Technik bekannten Verfahren ist es möglich geografische Objekte beliebiger Komplexität zu referenzieren und in einem Navigationssystem abzubilden. Mit Hilfe dieses Standes der Technik ist es auch möglich, Übergangspunkte zwischen verschiedenen Navigationskarten zu finden und damit einen Wechsel zwischen zwei Navigationskarten zu ermöglichen.

Aus dem Stand der Technik ist jedoch bislang keine Lösung bekannt, mit Hilfe derer der Wechsel zwischen zwei Navigationskarten einfach und sicher durchgeführt werden kann.

Hiervon ausgehend liegt der vorliegenden Erfindung das Problem zu Grunde, ein verbessertes Navigationssystem für ein Kraftfahrzeug sowie ein Verfahren zum Betreiben eines Navigationssystems zu schaffen.

Dieses Problem wird dadurch gelöst, dass das Eingangs genannte Navigationssystem durch die Merkmale des kennzeichnenden Teils des Anspruchs 1 weitergebildet ist. Das erfindungsgemäße Verfahren ist durch die Merkmale des Anspruchs 5 gekennzeichnet.

Erfindungsgemäß wird der Zeitpunkt für das Wechseln der Navigationskarten derart gewählt, dass während des Wechselvorgangs auf Grundlage der aktuellen Navigationsdaten des Kraftfahrzeugs ein Abweichen des Kraftfahrzeugs vom aktuell befahrenen Streckenabschnitt unwahrscheinlich ist. Hierdurch wird sichergestellt, dass während des Wechselvorgangs dem Fahrzeuginsassen keine zur Änderung der Navigationsroute erforderlichen Daten angezeigt werden müssen. Dies erhöht die Sicherheit der Zielführung.

Nach einer vorteilhaften Weiterbildung der Erfindung wird hierzu aus einer vom Navigationssystem ermittelten Navigationsroute des Kraftfahrzeugs ein Streckenabschnitt der Navigationsroute ermittelt, der abbiegefrei ist. Aus einer Länge des abbiegefreien Steckenabschnitts und einer für diesen Streckenabschnitt zulässigen Höchstgeschwindigkeit und/oder der aktuellen Fahrgeschwindigkeit wird dann eine erwartete Fahrzeit des Kraftfahrzeugs auf dem Streckenabschnitt ermittelt. Diese ermittelte Fahrzeit des Kraftfahrzeugs wird mit einer für den Wechselvorgang zwischen den Navigationskarten (Datenladen, Positionsfindung auf der neuen Navigationskarte, Routensuche,...) einschließlich dem ggf. notwendigen Wechselvorgang der Speichereinrichtung erforderlichen Zeit verglichen, und der Wechselvorgang wird dann eingeleitet, wenn die ermittelte Fahrzeit des Kraftfahrzeugs auf dem Streckenabschnitt größer als die für den Wechselvorgang erforderliche Zeit ist. Dies erlaubt einen sicheren Wechsel zwischen den Navigationskarten und Speichereinrichtung ohne Beeinträchtigung der Zielführung

Bevorzugte Weiterbildungen der Erfindung ergeben sich aus den abhängigen Ansprüchen und der nachfolgenden Beschreibung. Ein Ausführungsbeispiel der Erfindung wird unter Bezugnahme auf die Zeichnung näher erläutert. In der Zeichnung zeigt:
- Fig. 1:: ein stark schematisiertes Blockschaltbild des erfindungsgemäßen Navigationssystems,
- Fig. 2:: einen schematisierten Ausschnitt aus einer Landkarte zur Verdeutlichung des erfindungsgemäßen Verfahrens.

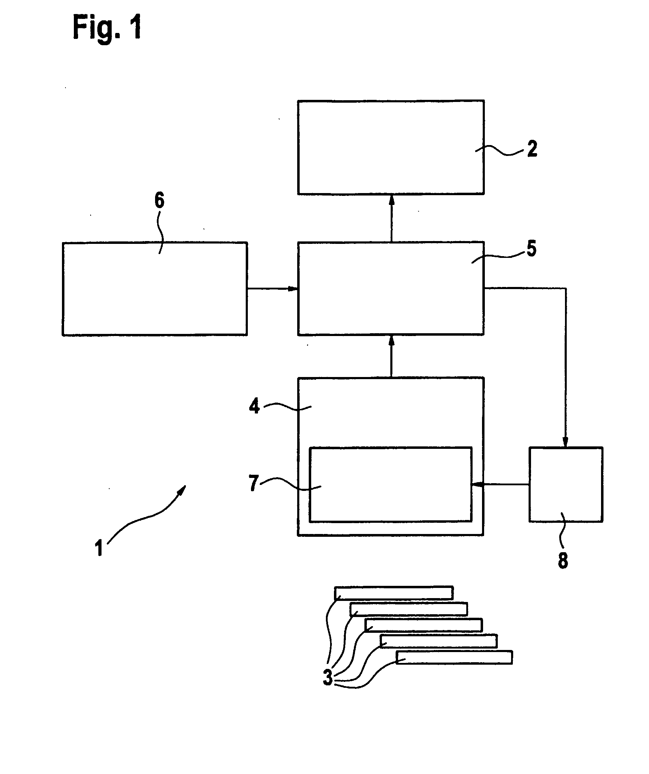

Figur 1 zeigt ein stark schematisiertes Blockschaltbild eines erfindungsgemäßen Navigationssystems 1 für ein Kraftfahrzeug. Mit Hilfe eines solchen Navigationssystems 1 werden einem Fahrzeuginsassen eine Navigationskarte sowie augenblickliche Navigationsdaten eines Kraftfahrzeugs auf einer Anzeigeeinrichtung 2 des Navigationssystems 1 visualisiert. Die Navigationskarten sind auf Speichereinrichtungen 3 gespeichert. Vorzugsweise ist auf jeder Speichereinrichtung 3 eine Navigationskarte gespeichert. Bei den Speichereinrichtungen 3 kann es sich zum Beispiel um CD-ROMs oder HDD handeln. Die Speichereinrichtungen 3 werden von einer Leseeinrichtung 4 des Navigationssystems 1 ausgelesen. Die über die Leseeinrichtung 4 ausgelesenen Daten werden einer Verarbeitungseinrichtung 5 des Navigationssystems 1 zugeführt. Die mit Hilfe einer Ortungseinrichtung 6 ermittelten aktuellen Navigationsdaten des Kraftfahrzeugs werden ebenfalls der Verarbeitungseinrichtung 5 zugeführt. In der Verarbeitungseinrichtung 5 werden die aktuellen Navigationsdaten des Kraftfahrzeugs auf der Navigationskarte, die auf der aktuell von der Leseeinrichtung 4 ausgelesenen Speichereinrichtung 3 gespeichert ist, gematcht. Anschließend werden die Navigationskarte und die auf der Navigationskarte gematchte Position des Kraftfahrzeugs auf der Anzeigeeinrichtung 2 visualisiert.

Die Leseeinrichtung 4 umfasst weiterhin eine Wechseleinrichtung 7. Mit Hilfe der Wechseleinrichtung 7 können die von der Leseeinrichtung 4 auszulesenden Speichereinrichtungen 3 gewechselt werden. So muss nämlich dann, wenn sich das Kraftfahrzeug infolge seiner Bewegung aus dem Bereich der Navigationskarte herausbewegt, die auf der augenblicklich ausgelesenen Speichereinrichtung 3 gespeichert ist, ein Wechsel auf eine neue Speichereinrichtung 3 durchgeführt werden, auf der die sich anschließende Navigationskarte gespeichert ist.

Erfindungsgemäß ist der Wechseleinrichtung 7 eine Steuereinrichtung 8 zugeordnet. Mit Hilfe der Steuereinrichtung 8 wird ein Zeitpunkt für das Wechseln einer Speichereinrichtung 3 in der Leseeinrichtung 4 derart gesteuert, dass während des Wechselvorgangs der Speichereinrichtung 3 ein Abweichen des Kraftfahrzeugs von einem aktuell befahrenen Streckenabschnitt unwahrscheinlich ist. Damit wird sichergestellt, dass während des Wechselvorgangs dem Fahrzeuginsassen keine Informationen über eine Änderung der Navigationsroute angezeigt werden müssen. Der Wechselvorgang läuft dann für den Fahrzeuginsassen unbemerkt und sicher ab.

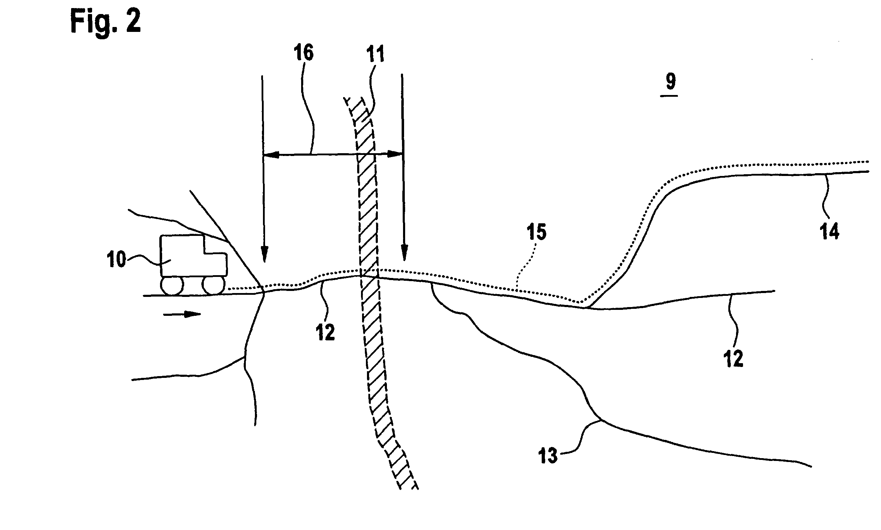

Das erfindungsgemäße Verfahren zur Steuerung des Navigationssystems 1 wird nachfolgend unter Bezugnahme auf Figur 2 im Detail erläutert. So zeigt Figur 2 eine auf der Anzeigeeinrichtung 2 visualisierte Navigationskarte 9 mit einer auf der Navigationskarte 9 gematchten Position eines Kraftfahrzeugs 10. Bei der in Figur 2 dargestellten Situation handelt es sich zum Beispiel um einen Vorgang, der einen bevorstehenden Grenzübertritt des Kraftfahrzeugs 10 von dem Hoheitsgebiet eines Staates auf das Hoheitsgebiet eines benachbarten Staates zeigt. So ist in Figur 2 eine Grenze 11 dargestellt.

Bei dem in Figur 2 dargestellten Ausführungsbeispiel der Erfindung ist die Navigationskarte für das Hoheitsgebiet des Staates, auf dem sich das Kraftfahrzeug 10 derzeit noch bewegt, auf einer Speichereinrichtung gespeichert, wobei hingegen die Navigationskarte für das Hoheitsgebiet des benachbarten Staates auf einer anderen Speichereinrichtung gespeichert ist. Überwindet demnach das Kraftfahrzeug 10 die Grenze 11, so muss vom Navigationssystem 1 ein Wechsel der Speichereinrichtung 3 durchgeführt werden.

Auf der in Figur 2 dargestellten Navigationskarte sind mehrere Straßen 12, 13, 14 dargestellt, die sich entlang einer in Figur 2 punktiert dargestellten Navigationsroute 15 des Kraftfahrzeugs 10 erstrecken. Bei dem in Figur 2 dargestellten Ausführungsbeispiel soll sich das Kraftfahrzeug 10 demnach entlang der Straße 12 bewegen, bis der Kreuzungspunkt mit der Straße 14 erreicht ist und an diesem Kreuzungspunkt soll das Kraftfahrzeug 10 auf die Straße 14 abbiegen. Bei der Navigation auf der Straße 12 passiert das Kraftfahrzeug 10 die Grenze 11, wobei hierdurch ein Wechsel der Speichereinrichtungen 3 im Navigationssystem 1 durchgeführt werden muss.

Erfindungsgemäß wird nun ein Zeitpunkt für das Wechseln der Navigationskarte, d.h. der entsprechenden Speichereinrichtung 3, auf der Navigationsdaten des jeweils erfassten geographischen Gebiets gespeichert sind, derart gewählt, dass während des Wechselvorgangs auf Grundlage der aktuellen Navigationsdaten des Kraftfahrzeugs 10 ein Abweichen des Kraftfahrzeugs 10 von der aktuell befahrenen Straße 12 unwahrscheinlich bzw. unmöglich ist.

Hierzu wird vom Navigationssystem 1 aus der ermittelten Navigationsroute entlang der Straße 12, auf der sich das Kraftfahrzeug 10 beim Grenzübertritt bewegt, ein Streckenabschnitt 16 ermittelt, der abbiegefrei ist. Passiert demnach das Kraftfahrzeug 10 bei der Navigation entlang der Straße 12 einen Kreuzungspunkt zwischen verschiedenen Straßen, so ermittelt das Navigationssystem ausgehend von diesem Kreuzungspunkt den in Fahrtrichtung des Kraftfahrzeugs vorausliegenden, abbiegefreien Streckenabschnitt 16. Unter einem abbiegefreien Streckenabschnitt ist ein Streckenabschnitt zu verstehen, in welchem keine Möglichkeit besteht, zum Beispiel infolge eines Kreuzungspunkts sich kreuzender Straßen, von dem befahrenen Streckenabschnitt abzuweichen. Aus der entsprechenden Länge des abbiegefreien Streckenabschnitts 16 und einer auf diesem Streckenabschnitt geltenden zulässigen Höchstgeschwindigkeit ermittelt das Navigationssystem 1 eine Navigationszeit des Kraftfahrzeugs 10 auf diesem abbiegefreien Streckenabschnitt 16. Bei dieser ermittelten Navigationszeit handelt es sich demnach um eine minimale, theoretische Navigationszeit, die das Kraftfahrzeug 10 bei Ausnutzen der zulässigen Höchstgeschwindigkeit zum Befahren des Streckenabschnitts 16 benötigt. Diese ermittelte Navigationszeit des Kraftfahrzeugs 10 wird von der Steuereinrichtung 8 mit einer für den Wechselvorgang der Speichereinrichtung 3 erforderlichen Zeit verglichen. Ist die ermittelte Navigationszeit des Kraftfahrzeugs 10 größer als die für den Wechselvorgang erforderliche Zeit, so wird von der Steuereinrichtung 8 der Wechselvorgang für die Speichereinrichtung 3 eingeleitet. Hierdurch wird sichergestellt, dass während des Befahrens des abbiegefreien Streckenabschnitts 16 der Wechselvorgang der Speichereinrichtung 3 mit Sicherheit durchgeführt werden kann.

Nach erfolgtem Wechsel der Speichereinrichtung 3 und damit nach erfolgtem Wechsel der Navigationskarte wird für das Aufsetzen der Navigationsdaten des Kraftfahrzeugs auf die neue Navigationskarte die unter Verwendung der alten Navigationskarte gematchte Postion des Kraftfahrzeugs 10 verwendet. Alternativ hierzu ist es auch möglich, dass während des Wechselvorgangs die Navigationsdaten des Kraftfahrzeugs 10 unter Verwendung der von der Ortungseinrichtung 6 ermittelten Daten blind weitergekoppelt werden. Nach dem Wechselvorgang wird in diesem Fall für das Aufsetzen der Navigationsdaten des Kraftfahrzeugs auf die neue Navigationskarte, die während des Wechselvorgangs weitergematchte Position des Kraftfahrzeugs 10 verwendet. Dieser Vorgang wird solange wiederholt, bis die Navigationsdaten des Kraftfahrzeugs 10 auf der neuen Navigationskarte aufgesetzt werden können.

In einer Weiterbildung des Verfahrens, prüft die Navigationseinheit bereits vor dem eigentlichen Wechsel, ob die Fahrzeugposition sich auf der neuen Navigationskarte befindet. Erst wenn dies gegeben ist, dann wird der beschriebene Umschaltmechanismus aktiv geschaltet. Dadurch ist sichergestellt, dass erst umgeschaltet wird, wenn sich das Fahrzeug auf der neuen Karte befindet und somit eine Route berechnet werden kann.

In einer weiteren Weiterbildung, werden bei positivem Prüfergebnis (Fahrzeugposition ist innerhalb der Karte = On Map) im Hintergrund Kartendaten von der neuen Navigationskarte in den Arbeitsspeicher geladen und die Verarbeitungseinheit matched die Fahrzeugposition auf die neuen Kartendaten. Sobeld eine gematchte Fahrzeugposition vorliegt, wird der beschriebene Umschaltmechanismus aktiv geschaltet. Dadurch ist sichergestellt, dass erst umgeschaltet wird, wenn bereits sicher ist, dass eine Fahrzeugposition auf einer digtalisierten Straße gefunden wurde.

Mit Hilfe des erfindungsgemäßen Navigationssystems bzw. des erfindungsgemäßen Verfahrens ist demnach ein sogenannter "On-the-Fly"-Übergang zwischen unterschiedlichen Navigationskarten möglich, der lediglich aufgrund der ohnehin vom Navigationssystem durchgeführten Ortungsfunktionen bewerkstelligt werden kann. Eine typische Anwendung für die Erfindung stellt ein Navigationssystem mit einem CD-Wechsler dar, in dem mehrere CDs mit entsprechend unterschiedlichen Navigationskarten enthalten sind.

### Bezugszeichenliste

- Navigationssystem: 1
- Anzeigeinrichtung: 2
- Speichereinrichtung: 3
- Leseeinrichtung: 4
- Verarbeitungseinrichtung: 5
- Ortungseinrichtung: 6
- Wechseleinrichtung: 7
- Steuereinrichtung: 8
- Navigationskarte: 9
- Kraftfahrzeug: 10
- Grenze: 11
- Straße: 12
- Straße: 13
- Straße: 14
- Navigationsroute: 15
- Streckenabschnitt: 16

## Patentansprüche

1. Navigationssystem für ein Kraftfahrzeug, mit mindestens einer Speichereinrichtung (3), wobei auf jeder Speichereinrichtung (3) mindestens eine Navigationskarte gespeichert ist, mit einer Leseeinrichtung (4), wobei die oder jede Speichereinrichtung (3) von der Leseeinrichtung (4) ausgelesen wird, mit einer der Leseeinrichtung (4) zugeordneten Wechseleinrichtung (7), wobei die Wechseleinrichtung (7) von der Leseeinrichtung (4) auszulesende Speichereinrichtungen (3) auswechselt, und mit mindestens einer Anzeigeeinrichtung (2), wobei über die Anzeigeeinrichtung (2) einem Fahrzeuginsassen eine Navigationskarte und/oder Piktogramme und Informationen über die augenblickliche Position des Kraftfahrzeugs visualisierbar sind, **gekennzeichnet durch** eine der Wechseleinrichtung (7) zugeordnete Steuereinrichtung (8), wobei die Steuereinrichtung (8) die Wechseleinrichtung (7) derart steuert, dass ein Zeitpunkt für das Wechseln der Speichereinrichtung (3) so bestimmbar ist, dass während des Wechselvorgangs der Speichereinrichtung (3) auf Grundlage der aktuellen Navigationsdaten des Kraftfahrzeugs ein Abweichen des Kraftfahrzeugs vom aktuell befahrenen Streckenabschnitt unwahrscheinlich ist.

2. Navigationssystem nach Anspruch 1, **dadurch gekennzeichnet, dass** die Steuerungseinrichtung (8) aus einer vom Navigationssystem ermittelten Navigationsroute des Kraftfahrzeugs einen Streckenabschnitt (16) der Navigationsroute ermittelt wird, der abbiegefrei ist.

3. Navigationssystem nach Anspruch 1 oder 2, **dadurch gekennzeichnet, dass** die Steuerungseinrichtung (8) weiterhin aus einer Länge des abbiegefreien Steckenabschnitts (16) und einer für diesen Streckenabschnitt zulässigen Höchstgeschwindigkeit und/oder aktuelle Fahrzeuggeschwindigkeit eine Navigationszeit des Kraftfahrzeugs auf dem Streckenabschnitt (16) ermittelt.

4. Navigationssystem nach einem oder mehreren der Ansprüche 1 bis 3, **dadurch gekennzeichnet, dass** die Steuerungseinrichtung (8) die ermittelte Navigationszeit des Kraftfahrzeugs mit einer für den Wechselvorgang der Speichereinrichtung erforderlichen Zeit vergleicht, und dass die Wechseleinrichtung (7) dann aktiviert wird, wenn die ermittelte Navigationszeit größer als die für den Wechselvorgang erforderliche Zeit ist.

5. Verfahren zum Betreiben eines Navigationssystems für ein Kraftfahrzeug, wobei auf einer Speichereinrichtung gespeicherte Daten einer Navigationskarte zusammen mit Navigationsdaten des Kraftfahrzeugs für einen Fahrzeuginsassen visualisiert werden, wobei ein Wechsel einer Speichereinrichtung durchgeführt wird, wenn sich das Kraftfahrzeug infolge seiner Bewegung aus dem Bereich der Navigationskarte herausbewegt, die auf der augenblicklich vom Navigationssystem genutzten Speichereinrichtung gespeichert ist, **dadurch gekennzeichnet, dass** der Zeitpunkt für das Wechseln der Speichereinrichtung derart gewählt wird, dass während des Wechselvorgangs der Speichereinrichtung auf Grundlage der aktuellen Navigationsdaten des Kraftfahrzeugs ein Abweichen des Kraftfahrzeugs vom aktuell befahrenen Streckenabschnitt unwahrscheinlich ist.

6. Verfahren nach Anspruch 5, **dadurch gekennzeichnet, dass** hierzu aus einer vom Navigationssystem ermittelten Navigationsroute des Kraftfahrzeugs ein Streckenabschnitt der Navigationsroute ermittelt wird, der abbiegefrei ist.

7. Verfahren nach Anspruch 6, **dadurch gekennzeichnet, dass** aus einer Länge des abbiegefreien Steckenabschnitts und einer für diesen Streckenabschnitt zulässigen Höchstgeschwindigkeit eine Navigationszeit des Kraftfahrzeugs auf dem Streckenabschnitt ermittelt wird.

8. Verfahren nach Anspruch 7, **dadurch gekennzeichnet, dass** die ermittelte Navigationszeit des Kraftfahrzeugs mit einer für den Wechselvorgang der Speichereinrichtung erforderlichen Zeit verglichen wird, und dass der Wechselvorgang dann eingeleitet wird, wenn die ermittelte Navigationszeit größer als die für den Wechselvorgang erforderliche Zeit ist.

9. Verfahren nach einem oder mehreren der Ansprüche 5 bis 8, **dadurch gekennzeichnet, dass** nach dem Wechselvorgang der Speichereinrichtung für das Aufsetzen der Navigationsdaten des Kraftfahrzeugs auf die neue Navigationskarte, die auf der eingewechselten Speichereinrichtung gespeichert ist, die unter Verwendung der alten Navigationskarte, die auf der ausgewechselten Speichereinrichtung gespeichert ist, gemachte Position des Kraftfahrzeugs verwendet wird.

10. Verfahren nach einem oder mehreren der Ansprüche 5 bis 8, **dadurch gekennzeichnet, dass** nach dem Wechselvorgang der Speichereinrichtung für das Aufsetzen der Navigationsdaten des Kraftfahrzeugs auf die neue Navigationskarte, die auf der eingewechselten Speichereinrichtung gespeichert ist, die während des Wechselvorgangs weitergemachte Position des Kraftfahrzeugs verwendet wird.

## Claims

1. Navigation system for a motor vehicle, having at least one memory device (3), at least one navigation map being stored on each memory device (3), having a reading device (4), the memory device (3), or each memory device (3), being read out by the reading device (4), having a changing device (7) which is assigned to the reading device (4), the changing device (7) changing memory devices (3) which are to be read out by the reading device (4), and having at least one display device (2), a navigation map and/or pictograms and information about the instantaneous position of the motor vehicle being capable of being displayed to a vehicle occupant by means of the display device (2), **characterized by** a control device (8) which is assigned to the changing device (7), the control device (8) controlling the changing device (7) in such a way that a time for changing the memory device (3) can be determined in such a way that, during the process of changing the memory device (3), the motor vehicle is unlikely to depart from the currently travelled-on section of a route on the basis of the current navigation data of the motor vehicle.

2. Navigation system according to Claim 1, **characterized in that** the control device (8) determines, from a navigation route of the motor vehicle determined by the navigation system, a section (16) of the navigation route which is free of bends.

3. Navigation system according to Claim 1 or 2, **characterized in that** the control device (8) also determines the navigation time of the motor vehicle on the sections (16) of the route from a length of the section (16) of the route which is free of bends and a maximum permissible speed for this section of the route and/or current vehicle speed.

4. Navigation system according to one or more of Claims 1 to 3, **characterized in that** the control device (8) compares the determined navigation time of the motor vehicle with a time which is necessary for the process of changing the memory device, and **in that** the changing device (7) is activated if the determined navigation time is longer than the time which is necessary for the changing process.

5. Method for operating a navigation system for a motor vehicle, data, stored in a memory device, of a navigation map being displayed to a vehicle occupant together with navigation data of the motor vehicle, a memory device being changed if, owing to its movement, the motor vehicle moves out of the area of the navigation map which is stored on the memory device which is currently being used by the navigation system, **characterized in that** the time for the changing of the memory device is selected in such a way that, during the process of changing the memory device, the motor vehicle is unlikely to depart from the currently travelled-on section of a route on the basis of the current navigation data of the motor vehicle.

6. Method according to Claim 5, **characterized in that**, for this purpose, a section of the navigation route of the motor vehicle which is determined by the navigation system which is free of bends is determined.

7. Method according to Claim 6, **characterized in that**, from a length of the section of a route which is free of bends and a maximum permissible speed for this section of a route, a navigation time of the motor vehicle on the section of a route is determined.

8. Method according to Claim 7, **characterized in that** the determined navigation time of the motor vehicle is compared with a time which is necessary for the process of changing the memory device, and **in that** the changing process is initiated if the determined navigation time is longer than the time necessary for the changing process.

9. Method according to one or more of Claims 5 to 8, **characterized in that**, after the process of changing the memory device in order to install the navigation data of the motor vehicle on the new navigation map which is stored on the newly installed memory device, the position of the motor vehicle which was determined using the old navigation map which is stored on the memory device which has been removed is used.

10. Method according to one or more of Claims 5 to 8, **characterized in that** after the process of changing the memory device in order to install the navigation data of the motor vehicle on the new navigation map which is stored on the newly installed memory device, the position of the motor vehicle which was arrived at during the changing process is used.

## Revendications

1. Système de navigation pour un véhicule automobile comportant au moins une installation de mémoire (3), contenant en mémoire au moins une carte de navigation,
une installation de lecture (4) pouvant lire chaque installation de mémoire (3),
une installation de changement (7) associée à l'installation de lecture (4), et changeant les installations de mémoire (3) lues par l'installation de lecture (4), et au moins une installation d'affichage (2), visualisant pour l'occupant du véhicule une carte de navigation et/ou des pictogrammes et des informations concernant la position instantanée du véhicule,
**caractérisée par**
une installation de commande (8) associée à l'installation de changement (7),
l'installation de commande (8) commandant l'installation de changement (7) pour déterminer l'instant du changement de l'installation de mémoire (3) pour que pendant l'opération de changement de l'installation de mémoire (3), sur la base des données de navigations actuelles du véhicule, une déviation du véhicule par rapport au segment de trajet parcouru actuellement soit improbable.

2. Système de navigation selon la revendication 1,
**caractérisé en ce que**
l'installation de commande (8) détermine un segment de trajet (16) sans déviation du trajet de navigation, à partir du trajet de navigation du véhicule fourni par le système de navigation.

3. Système de navigation selon la revendication 1 ou 2,
**caractérisé en ce que**
l'installation de commande (8) détermine en outre à partir d'une longueur du segment de trajet sans déviation (16) et d'une vitesse maximale autorisée pour ce segment de trajet et/ou de la vitesse actuelle du véhicule, un temps de navigation du véhicule sur le segment de trajet (16).

4. Système de navigation selon l'une des revendications 1 à 3,
**caractérisé en ce que**
l'installation de commande (8) compare le temps de navigation du véhicule ainsi obtenu à un temps nécessaire à l'opération de changement de l'installation de mémoire et active l'installation de changement (7) si le temps de navigation obtenu est supérieur au temps nécessaire à l'opération de changement.

5. Procédé de gestion d'un système de navigation d'un véhicule automobile selon lequel on visualise pour un occupant du véhicule, les données enregistrées dans une installation de mémoire correspondant à une carte de navigation ainsi que les données de navigation du véhicule, en effectuant un changement d'installation de mémoire si du fait de son mouvement, le véhicule sort de la zone de la carte de navigation enregistrée dans l'installation de mémoire utilisée à ce moment par le système de navigation,
**caractérisé en ce que**
l'instant du changement de l'installation de mémoire est choisi pour que pendant l'opération de changement de l'installation de mémoire, sur le fondement, des données de navigation actuelles du véhicule, toute déviation du véhicule par rapport au segment de trajet emprunté actuellement est improbable.

6. Procédé selon la revendication 5,
**caractérisé en ce qu'**
à partir du trajet de navigation du véhicule fixé par le système de navigation, on détermine un segment de trajet de navigation qui ne comporte pas de déviation.

7. Procédé selon la revendication 6,
**caractérisé en ce qu'**
à partir de la longueur du segment de trajet sans déviation et d'une vitesse maximale autorisée pour ce segment de trajet, on détermine un temps de navigation du véhicule sur ce segment de trajet.

8. Procédé suivant la revendication 7,
**caractérisé en ce qu'**
on compare le temps de navigation déterminé du véhicule à un temps nécessaire à l'opération de changement de l'installation de mémoire, et on lance l'opération de changement si le temps de navigation obtenu est supérieur au temps nécessaire à l'opération de changement.

9. Procédé selon une ou plusieurs des revendications 5 à 8,
**caractérisé en ce qu'**
après l'opération de changement de l'installation de mémoire pour appliquer les données de navigation du véhicule sur la nouvelle carte de navigation enregistrée dans l'installation de mémoire et qui vient d'être changée, on utilise la position du véhicule dans le cadre de l'ancienne carte de navigation enregistrée dans l'installation de mémoire qui a été changée.

10. Procédé selon une ou plusieurs des revendications 5 à 8,
**caractérisé en ce qu'**
après l'opération de changement de l'installation de mémoire pour appliquer les données de navigation du véhicule sur la nouvelle carte de navigation en mémoire dans l'installation de mémoire qui vient d'être changée, on utilise la position du véhicule qui a continué pendant l'opération de changement.
